# DEMANDE DE BREVET EUROPEEN

(11) **EP 4 546 059 A1**
(43) Date de publication de la demande: **30.04.2025**
(21) Numéro de dépôt: 23206212.5
(22) Date de dépôt: 26.10.2023
(51) Int. Cl.: G04B 19/04, A44C 27/00, B29C 33/38, G04B 19/10, G04B 37/22, G04B 45/00, B29C 51/26

(54) **PROCÉDÉ D'OBTENTION D'UN ARTICLE AVEC UNE SURFACE POLYCRISTALLINE SCINTILLANTE**

(71) Demandeur: The Swatch Group Research and Development Ltd, 2074 Marin (CH)
(72) Inventeur: CURCHOD, Loïc, 1004 Lausanne (CH); SAGARDOYBURU, Michel, 2000 Neuchâtel (CH); WINKLER, Yves, 3185 Schmitten (CH); SPRINGER, Simon, 3007 Berne (CH)
(74) Mandataire: ICB SA

(57) **Abrégé**

L'invention concerne un procédé d'obtention d'un article décoratif (5) présentant un aspect scintillant, ledit procédé comprenant les étapes de :
- Mise à disposition ou réalisation d'une maquette (1) avec une face (1a) présentant une structure polycristalline destinée à être répliquée,
- Réalisation d'une réplique (2) en matériau polymère de ladite face (1a),
- Suivies d'une étape optionnelle de :
- Réalisation d'un objet (4) sur au moins une portion de la face répliquée (2a) de la réplique (2),
le procédé étant caractérisé en ce qu'une ou plusieurs actions sont mises en oeuvre lors des étapes précitées pour conférer des effets optiques particuliers et/ou un aspect fonctionnel à l'article décoratif (5), une ou plusieurs des actions étant choisies parmi les actions suivantes:
- Modification locale de la structure polycristalline de la maquette (1) avant la réalisation de la réplique (2),
- Modification de la forme de la réplique (2),
- Réalisation de l'objet (4) de manière sélective sur certaines portions de la face répliquée (2a) de la réplique négative (2),
l'article décoratif (5) étant soit la réplique (2), soit l'objet (4) si l'étape optionnelle est effectuée.

La présente invention se rapporte également à un article décoratif (5) réalisé selon le procédé décrit ci-avant.

## Description

### Domaine technique de l'invention

La présente invention se rapporte à un procédé de réalisation d'un article présentant un effet scintillant, préférentiellement d'aspect précieux, sur au moins une de ses surfaces. En particulier, ledit article est un composant d'habillage horloger tel qu'un cadran.

### Arrière-plan technologique

On connaît de l'art antérieur des procédés pour réaliser un article avec une structure de surface décorative, faisant appel à une méthode de réplique d'une maquette ayant ladite structure de surface décorative. La méthode se base sur un moulage polymère soit utilisé comme tel avec une couche PVD décorative, soit suivi d'une réplique par emboutissage à chaud de métal amorphe tel que décrit dans le document US 5,950,704, ou par croissance galvanique telle que schématisé à la figure 2 des figures annexées au présent document. Une maquette 1 avec une structure 1a est mise à disposition (A). Une couche de polymère formant une réplique négative 2 est moulée sur la structure 1a de la maquette 1 (B). La maquette 1 est retirée et une couche conductrice 3 est déposée sur l'empreinte 2a de la réplique négative 2 (C). Par croissance galvanique, une couche métallique 4 est déposée sur la face de la réplique 2 avec l'empreinte 2a (D). La réplique 2 est retirée et il reste ainsi un article 5 qui est une copie de la maquette originale 1 (E). Eventuellement, cet article 5 peut être réutilisé comme maquette pour réaliser des pièces additionnelles. Aussi, la réplique négative 2 en polymère peut être l'article final.

### Résumé de l'invention

L'objet de l'invention est d'affiner cette méthode de réplication pour réaliser un article avec une surface polycristalline scintillante, éventuellement d'aspect précieux. Plus spécifiquement, la méthode est adaptée pour donner à la surface de l'article une forme particulière et/ou un effet optique particulier dans un but décoratif et/ou fonctionnel.

Plus précisément, l'invention se rapporte à un procédé d'obtention d'un article décoratif présentant un aspect scintillant, ledit procédé comprenant les étapes de :
- Mise à disposition ou réalisation d'une maquette avec une face présentant une structure polycristalline destinée à être répliquée,
- Réalisation d'une réplique négative en matériau polymère de ladite face,
- Séparation de la maquette et de la réplique,
- Suivies d'une étape optionnelle de :
- Réalisation d'un objet, aussi appelé réplique positive, sur au moins une portion de la face répliquée de la réplique négative,
le procédé étant caractérisé en ce qu'une ou plusieurs actions sont mises en oeuvre lors des étapes précitées pour conférer des effets optiques particuliers et/ou un aspect fonctionnel à l'article décoratif, une ou plusieurs des actions étant choisies parmi les actions suivantes :
- Modification locale de la structure polycristalline de la maquette,
- Modification de la forme de la réplique négative,
- Réalisation de l'objet de manière sélective sur certaines portions de la face répliquée de la réplique négative,
l'article décoratif étant soit la réplique négative, soit l'objet si l'étape optionnelle est effectuée.

L'aspect scintillant et éventuellement précieux de l'article est conféré par le caractère polycristallin de la maquette avec des effets décoratifs spéciaux liés à la variation contrôlée de la croissance des cristaux lors de la réalisation de la maquette ou après la réalisation par structuration des cristaux. L'aspect plus ou moins précieux de l'article sera fonction du choix du matériau de la réplique positive et des traitements de finition de l'article après la réplication.

D'autres effets décoratifs peuvent être obtenus lors de la réalisation de l'objet en donnant à la réplique négative une forme particulière ou en réalisant l'objet de manière sélective sur la réplique négative.

Un aspect fonctionnel peut également être apporté par cette mise en forme particulière de la réplique, par la réalisation sélective de l'objet ou par la modification de la maquette via, par exemple, l'inscription de données cachées (logo, numéro de série, etc.).

Un autre aspect de l'invention concerne l'article obtenu par ledit procédé.

### Brève description des figures

La figure 1 représente un article décoratif, en particulier, un cadran obtenu avec le procédé selon l'invention.

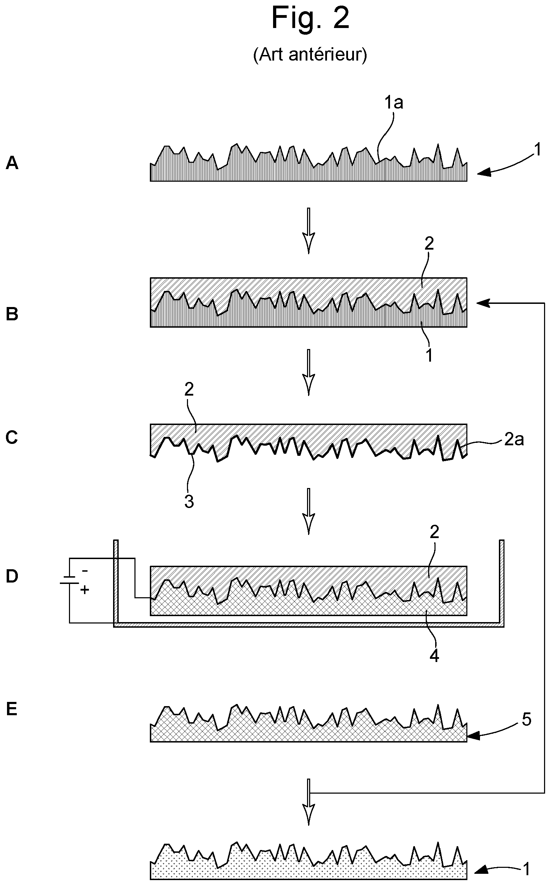

La figure 2 représente schématiquement un procédé d'obtention d'un article par réplication selon l'art antérieur.
La figure 3 représente schématiquement le procédé d'obtention selon une variante de l'invention avec une mise en forme 2D de l'objet sur la réplique négative en polymère.
La figure 4 représente schématiquement le procédé d'obtention selon une autre variante de l'invention avec une mise en forme 3D de la réplique négative en polymère.

### Description détaillée de l'invention

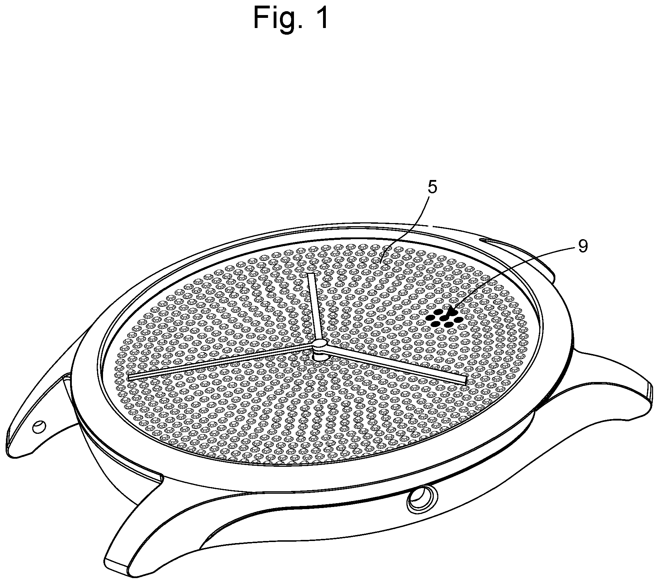

La présente invention se rapporte à un procédé d'obtention d'un article décoratif par réplication d'une maquette. Il peut par exemple s'agir d'une pièce de bijouterie ou encore d'un composant d'habillage horloger tel qu'une carrure, un fond, une lunette, un poussoir, un maillon de bracelet, un rehaut, un cadran, une aiguille ou un index de cadran. Cet article a pour caractéristique de présenter sur au moins une de ses faces un aspect scintillant et éventuellement précieux. A titre d'exemple, un article 5 sous forme d'un cadran avec un logo 9 obtenu avec le procédé de l'invention est représenté à la figure 1.

Le procédé d'obtention de l'article décoratif 5 comporte en préambule les étapes suivantes connues de l'art antérieur :
- Mise à disposition ou réalisation d'une maquette 1 avec une face 1a présentant une structure polycristalline destinée à être répliquée,
- Réalisation d'une réplique négative 2 en matériau polymère de ladite face 1a,
- Séparation de la réplique négative 2 et de la maquette 1,
- Optionnellement, réalisation d'un objet 4, aussi appelé réplique positive sur au moins une portion de la face répliquée 2a de la réplique négative 2,
- ledit article décoratif 5 étant soit la réplique négative 2, soit la réplique positive 4.

La maquette 1 avec la structure polycristalline est obtenue par croissance polycristalline naturelle, aussi appelée *self-assembly.* Cela permet d'avoir des facettes lisses à l'échelle atomique ainsi que des arêtes parfaites. Par exemple, la croissance polycristalline peut être réalisée par évaporation, par plasma sous vide avec une source arc ou micro-ondes ou par filaments chauds. Dans tous les cas, la température est un facteur gouvernant la croissance des cristaux de la maquette.

Concernant le matériau polycristallin de la maquette 1, il peut s'agir, par exemple, d'un métal, de diamant ou encore d'une céramique. On précisera, en variante, que la maquette pourrait également être une pièce issue d'une réplique préalablement réalisée. Dans ce cas, la face à répliquer présente une structure cristalline, qu'on peut aussi qualifier de motif reproduisant une structure cristalline, n'ayant pas été obtenue par croissance polycristalline naturelle. Dans les deux cas, on parlera d'une maquette 1 avec une surface 1a présentant une structure polycristalline.

L'objet 4 peut être obtenu par électroformage d'un métal sur la face répliquée 2a ayant préalablement été revêtue d'une couche conductrice 3, par injection de matière sur la réplique négative 2 servant d'insert dans un moule ou par emboutissage d'une matière sur la face répliquée 2a. L'objet 4 est réalisé dans un métal ou un alliage métallique lorsqu'il est obtenu par croissance galvanique. L'objet est réalisé en céramique, en métal éventuellement amorphe, en polymère ou en matériau composite s'il est obtenu par injection ou emboutissage. Lorsque l'article 5 est la réplique négative 2, il est réalisé en polymère.

Selon l'invention, un effet décoratif et/ou fonctionnel est obtenu sur l'article par une ou plusieurs des actions suivantes effectuées lors du procédé d'obtention, soit sur la maquette 1, soit sur la réplique négative 2, soit sur les deux.

En vue d'obtenir des effets optiques particuliers, les actions sont effectuées sur la maquette 1 pendant sa réalisation ou après sa réalisation. Pendant la croissance par *self-assembly* de la maquette 1, les paramètres de croissance et en particulier la température sont modifiés localement et de manière contrôlée afin de faire varier sélectivement la taille et/ou l'orientation des cristaux sur la surface de la maquette 1. Il en résulte un effet optique supplémentaire au niveau du scintillement pour une esthétique augmentée. Dans un but fonctionnel et/ou décoratif, la variation locale des paramètres de croissance permet d'inscrire un logo, de créer des appliques polycristallines ou tout autre décor sur la surface polycristalline 1a de la maquette 1.

Après la réalisation de la maquette 1 avec la structure polycristalline 1a, la forme des cristaux peut également être modifiée en retravaillant, tronquant leurs sommets et faces. Cela peut être réalisé, par exemple, par attaque laser sélective ou par un usinage mécanique local. Il en résulte également un effet optique supplémentaire au niveau du scintillement pour une esthétique augmentée. Cela permet, par exemple, de créer une image holographique. Dans un but fonctionnel, cela permet d'inscrire des données cachées telles qu'un logo discret, une matrice de données, un numéro de série, etc. lisibles à l'aide d'un dispositif optique spécial. Modifier la forme des cristaux peut être réalisé soit sur la maquette 1 originelle, soit sur une réplique positive 4 qui sert de maquette.

Selon l'invention, les actions pendant et après la réalisation de la maquette 1 peuvent être combinées.

Des actions peuvent également être réalisées sur la réplique négative 2 en polymère. Il s'agit de mises en forme 2D, 2.5D et/ou 3D avec pour but une amélioration de l'aspect esthétique et/ou une contribution fonctionnelle. La mise en forme consiste à structurer la réplique négative 2 avant de réaliser l'objet 4.

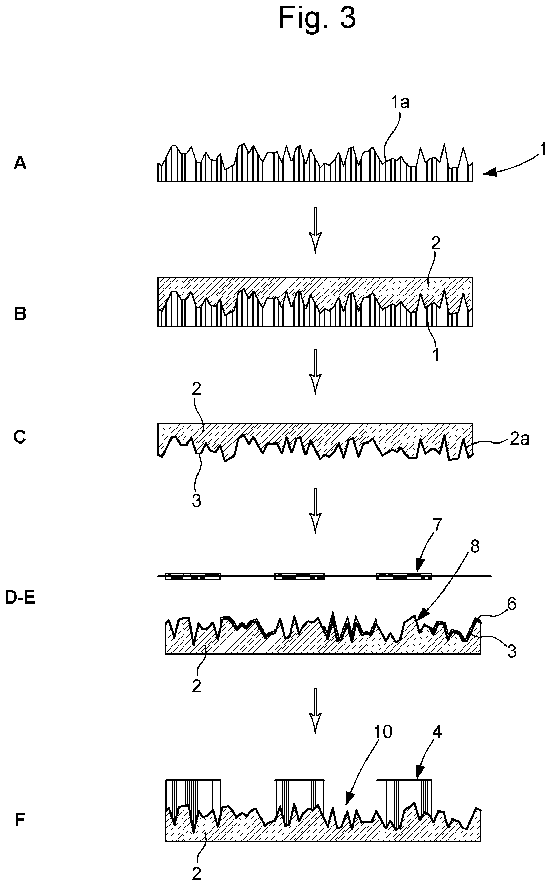

Pour une mise en forme 2D de l'objet 4 sur la réplique négative 2, le procédé LIGA est utilisé tel que schématisé à la figure 3. Après le dépôt de la couche conductrice 3 (C) sur la face 2a de la réplique 2, par exemple par dépôt PVD sous vide, et avant la croissance galvanique de l'objet 4, une couche de résine photosensible 6 est déposée sur au moins une partie de la face 2a (D). Elle est irradiée de manière sélective, soit à travers un masque 7 préalablement structuré (E), c'est-à-dire par photolithographie conventionnelle telle qu'illustré dans la figure 3, ou par lithographie laser sur certaines portions sans nécessiter de masque. Les portions de résine irradiées sont éliminées - ou inversement selon que la résine photosensible utilisée est positive ou négative respectivement - par des moyens chimiques pour créer des cavités 8 où l'objet 4 est ensuite réalisé par électroformage (F). Cela permet de créer des articles avec des contours complexes, des trous traversants 10, des angles vifs, etc. tout en gardant une surface polycristalline scintillante.

Pour une mise en forme 2.5D, le procédé est sensiblement le même avec des étapes de dépôt de la couche conductrice et d'irradiation de la couche de résine photosensible répétées sur plusieurs niveaux afin de créer des niveaux, des trous borgnes, etc.

Pour la mise en forme 2D et 2.5D, un usinage classique peut aussi intervenir pour introduire des structures complexes.

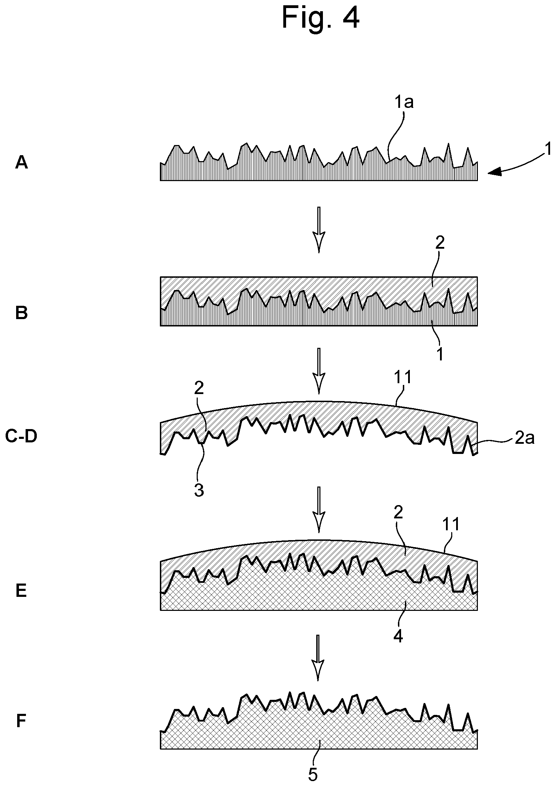

Pour une mise en forme 3D, il est nécessaire de réaliser une réplique négative 2 en polymère souple, par exemple, en silicone. Le procédé est illustré à la figure 4. Il consiste à mettre en forme la réplique souple 2 selon la forme souhaitée et de la fixer dans cette forme, par exemple en la plaçant sur un substrat rigide 11 de la forme désirée qui peut être à titre illustratif un second polymère rigide (C). La réplique 2 peut par exemple être collée sur le substrat rigide 11. Les formes sont variées. Il peut s'agir de formes bombées, sphériques, cylindriques, etc. Ensuite, le dépôt de la couche conductrice 3 nécessaire à la croissance galvanique est effectué (D). En variante, il est également envisageable de mettre en forme le polymère 2 après le dépôt de la couche métallique 3. La croissance galvanique pour fabriquer l'objet 4 est ensuite effectuée (E). En variante, la réplique 2 en polymère souple ainsi mise en forme pourrait être utilisée comme insert dans un moule d'injection, l'objet étant obtenu par injection de céramique ou de métal ou de toute autre matière injectable dans le moule ou par emboutissage. Cela permet de créer des articles 3D avec une surface polycristalline scintillante (F). Par exemple, il peut s'agir d'aiguilles polycristallines, de carrures polycristallines ou encore de maillons avec une structure polycristalline.

Ensuite, les articles obtenus avec les différents procédés de réplique ci-avant peuvent être terminés avec des méthodes de mise en forme telles que l'usinage classique, le laser, le jet d'eau et des méthodes de mise en couleur par exemple par PVD, CVD, ALD ou par croissance galvanique dans le cas d'un objet métallique. Le dépôt sous vide d'une couche mince métallique précieuse (or, alliage d'or, Pt, etc...) ou d'aspect métallique précieuse (TiN jaune, etc... ) permet de conférer un aspect précieux à l'article tout en ayant l'effet scintillant. Une mise en couleur avec une laque par exemple permet par contre de réaliser un objet sans aspect précieux mais avec l'effet scintillant.

Dans une variante de l'invention, la mise en couleur par dépôt sous vide s'effectue de manière conforme sur les facettes de la structure polycristalline. Dans le cas des dépôts directifs en PVD, cela implique une incidence normale sur la surface de la réplique négative ou de l'objet ou une rotation de la pièce afin d'obtenir une coloration homogène.

Dans une autre variante de l'invention, le caractère directif des dépôts PVD, notamment l'évaporation, est mis à profit pour une mise en couleur par métallisation ou dépôts de couches diélectriques avec une incidence inclinée ou rasante sur la surface polycristalline de la réplique négative ou de l'objet, ne couvrant ainsi les facettes que dans une certaine orientation pour donner un aspect optique particulier.

### Nomenclature

1. Maquette
   a. Surface polycristalline
2. Réplique négative
   a. Face répliquée
3. Couche conductrice
4. Objet, aussi appelé réplique positive
5. Article décoratif
6. Couche de résine photosensible
7. Masque
8. Cavité
9. Logo
10. Trou
11. Substrat rigide

## Revendications

1. Procédé d'obtention d'un article décoratif (5) présentant un aspect scintillant, ledit procédé comprenant les étapes de :
- Mise à disposition ou réalisation d'une maquette (1) avec une surface (1a) présentant une structure polycristalline destinée à être répliquée,
- Réalisation d'une réplique négative (2) en matériau polymère de ladite surface (1a),
- Séparation de la maquette (1) et de la réplique négative (2),
- Suivies d'une étape optionnelle de :
- Réalisation d'un objet (4), aussi appelé réplique positive, sur au moins une portion de la face répliquée (2a) de la réplique négative (2),
le procédé étant **caractérisé en ce qu'**une ou plusieurs actions sont mises en oeuvre lors des étapes précitées pour conférer des effets optiques particuliers et/ou un aspect fonctionnel à l'article décoratif (5), une ou plusieurs des actions étant choisies parmi les actions suivantes :
- Modification locale de la structure polycristalline de la maquette (1),
- Modification de la forme de la réplique négative (2),
- Réalisation de l'objet (4) de manière sélective sur certaines portions de la face répliquée (2a) de la réplique négative (2) si l'étape optionnelle est effectuée,
l'article décoratif (5) obtenu étant soit la réplique négative (2), soit la réplique positive (4) si l'étape optionnelle est effectuée.

2. Procédé d'obtention selon la revendication 1, **caractérisé en ce que** la structure polycristalline de la maquette (1) est modifiée lors de sa réalisation en changeant localement la température de la maquette (1) lors de la croissance des cristaux.

3. Procédé d'obtention selon l'une des revendications précédentes, **caractérisé en ce que** la structure de la surface (1a) de la maquette (1) est modifiée après sa réalisation en retravaillant la forme de certains cristaux.

4. Procédé d'obtention selon la revendication précédente, **caractérisé en ce que** la forme des sommets et faces de certains cristaux de la surface (1a) de la maquette (1) est modifiée par une attaque laser sélective ou par un usinage mécanique local.

5. Procédé d'obtention selon l'une des revendications précédentes, **caractérisé en ce que** la réalisation de l'objet (4) de manière sélective sur certaines portions de la face répliquée (2a) de la réplique négative (2) est effectuée en vue d'obtenir une mise en forme 2D de l'objet (4) sur la face répliquée (2a) de la réplique négative (2), la réalisation de l'objet (4) étant effectuée à l'aide du procédé LIGA avec les sous-étapes de :
- Dépôt d'une couche conductrice (3) sur la face répliquée (2a) de la réplique négative (2),
- Dépôt d'une couche de résine photosensible (6) sur la couche conductrice (3),
- Irradiation sélective de la couche de résine photosensible (6),
- Elimination des portions de la couche de résine photosensible (6) irradiées ou en alternative non irradiées pour créer des cavités (8) laissant libre la couche conductrice (3),
- Croissance galvanique de l'objet (4) dans lesdites cavités (8).

6. Procédé d'obtention selon la revendication précédente, **caractérisé en ce que** les étapes de dépôt de la couche conductrice (3), de dépôt de la couche de résine photosensible (6), d'irradiation sélective de la couche de résine photosensible (6), d'élimination des portions de la couche de résine photosensible (6) et de croissance galvanique de l'objet (4) sont répétées sur plusieurs niveaux en vue d'obtenir une mise en forme 2.5D de l'objet (4) sur la face répliquée (2a) de la réplique négative (2).

7. Procédé d'obtention selon l'une des revendications précédentes, **caractérisé en ce que** la réplique négative (2) est mise en forme afin de conférer une forme tridimensionnelle à l'objet (4) lors de l'étape de réalisation dudit objet (4), l'étape de réalisation d'une réplique négative (2) étant effectuée avec un polymère souple tel que du silicone, la réplique négative (2) étant ensuite mise en forme selon la forme souhaitée et figée dans cette forme.

8. Procédé d'obtention selon la revendication précédente, **caractérisé en ce que** la réplique négative (2) est figée dans ladite forme par fixation sur un substrat rigide (11).

9. Procédé d'obtention selon l'une des revendications précédentes, **caractérisé en ce que** l'objet (4) est réalisé par électroformage, par injection ou par emboutissage.

10. Procédé d'obtention selon l'une des revendications précédentes, **caractérisé en ce que** l'objet (4) est réalisé dans un matériau choisi parmi un métal, un alliage métallique, une céramique, un polymère et un matériau composite.

11. Procédé d'obtention selon l'une des revendications précédentes, **caractérisé en ce qu'**il comprend une étape additionnelle de mise en couleur de l'objet (4) ou de la réplique négative (2) si cette dernière est destinée à former l'article (5), la mise en couleur étant réalisée par un dépôt sous vide sur l'objet (4) ou sur la réplique négative (2) ou par croissance galvanique sur l'objet (4) si ledit objet (4) est métallique.

12. Procédé d'obtention selon la revendication précédente, **caractérisé en ce que** l'objet (4) est mis en couleur par un dépôt métallique ou diélectrique par PVD directif avec une incidence inclinée ou rasante de sorte que les facettes de la surface polycristalline répliquée soient couvertes uniquement dans une certaine direction afin d'obtenir un effet optique particulier.

13. Article décoratif (5) présentant un aspect scintillant obtenu à l'aide du procédé selon l'une des revendications précédentes, **caractérisé en ce que** ledit article décoratif (5) est une pièce de bijouterie ou un composant horloger d'habillage.

14. Article décoratif (5) selon la revendication précédente, **caractérisé en ce que** le composant horloger d'habillage est une carrure, un cadran, une aiguille, une applique ou un maillon.

15. Article décoratif (5) selon la revendication 13 ou 14, **caractérisé en ce qu'**il comporte un ou plusieurs motifs, un relief et/ou une forme non plane.

16. Article décoratif (5) selon la revendication précédente, **caractérisé en ce que** le ou les motifs et le relief sont choisis parmi un logo (9), une image holographique, un numéro de série, une matrice de données et un trou (10).

17. Article décoratif (5) selon l'une des revendications 13 à 16, **caractérisé en ce qu'**il présente également un aspect précieux.
